# EUROPEAN PATENT SPECIFICATION

(11) **EP 1 037 126 B1**
(45) Date of publication and mention of the grant of the patent: **19.11.2008**
(21) Application number: 00850041.5
(22) Date of filing: 07.03.2000
(51) Int. Cl.: G05B 19/042, G05B 19/414

(54) **A signal handling device**
Signalverarbeitungseinrichtung
Dispositif de traitement de signaux

(30) Priority: 08.03.1999 SE 9900820; 30.07.1999 US 364448
(43) Date of publication of application: 20.09.2000
(73) Proprietor: LEINE & LINDE AB, 645 21 Strängnäs (SE); Dr. Johannes Heidenhain GmbH, 83292 Traunreut (DE)
(72) Inventor: Fuchs, Peter, 83349 Palling (DE); Thorsander, Ulf, 155 34 Nykvarn (SE)
(74) Representative: Stein, Jan Anders Lennart

(56) References cited:
- DE-A1- 19 633 744
- US-A- 4 878 002
- US-A- 5 420 485
- US-A- 5 687 103
- ODEBERG H: "A tactile sensor data-processing system" SENSORS AND ACTUATORS A, ELSEVIER SEQUOIA S.A., LAUSANNE, CH, vol. 49, no. 3, July 1995 (1995-07), pages 173-180, XP004303640 ISSN: 0924-4247

## Description

The present invention relates to a signal handling device for enabling data transmission between a plurality of position measuring devices and a master unit. The invention also relates to an intelligent slave unit for co-operation with the signal handling device, and to a position monitoring system including a signal handling device, an intelligent slave unit and a plurality of position measuring devices. The invention also relates to a method for enabling data transmission between a plurality of position measuring devices and a master unit, and to a computer program product for performing the method.

### BACKGROUND OF THE INVENTION

In many industrial applications there is a need to monitor the movement of a plurality of movable parts. Such monitoring requires the delivery of a number of position signals to a master unit. The master unit may operate to control actuators causing the movement.

The position signals are generated by position measuring devices, i.e. devices for generating a signal indicative of a position. Optoelectrical position measuring devices include an encoding disc that has an optically readable pattern. The disc pattern is read by one or more detectors which each deliver an electric signal in relation to the amount of light that is received in the detector, so that movement of the encoding disc in relation to the detector will be indicated by changes in the electric signal.

The encoding disc includes a periodic pattern, such as a plurality of light and dark fields of mutually the same size, for instance. When the encoding disc is turned or rotated, the change between dark and light fields can be detected and a change in angle thus determined. Some position measurement devices provide a position signal comprising a plurality of pulse signals, where the state of the pulse signals at an instant of time defines the absolute position of the encoding disc in relation to the detector. These position measuring devices are also referred to as absolute encoders.

US 5,687, 103 describes a position measuring device having a memory in which specific parameters of the position measuring device are kept. These parameters can be sent on a data line to a processing unit.

US5,420,485 discloses a system and method for initializing a plurality of mechanical elements of a machine. The disclosed system includes a plurality of housings and an uncoordinated motion controller. The housings are coupled to the mechanical elements and include at least a motor controller electrically connected to a motor. The uncoordinated motor controller instructs the motor controllers to operate its associated motor until the associated mechanical element reaches an initialization position. The velocity of acceleration profile of the respective motors are independent of each other. A multi-node daisy chained data bus electrically connects the uncoordinated motion controlling means and the motor controllers in series.

### SUMMARY OF THE INVENTION

The present invention addresses the problem of improving performance of a position monitoring system, or a control system, using a plurality of position measuring devices, and reducing the costs for such a system.

According to an embodiment of the invention this problem is addressed by a signal handling device for enabling data transmission between a plurality of position measuring devices and a master unit; the signal handling device comprising:
a main communications port for communicating with a master unit via a data bus;
a measurement port for communicating with a position measuring device;
an extension port for connection to an intelligent slave unit so as to enable communication with a plurality of position measuring devices via the said slave unit; and
an intelligent data processing unit capable of managing data traffic between the main communications port, the measurement port and the extension port.

This solution provides the advantage that a plurality of position measuring devices can be connected to the data bus via a single main communications port. Thereby the master is enabled to communicate with a plurality of position measuring devices using a single address on the data bus, an advantageous feature which reduces the number of position request messages the master has to send for receiving position values from a plurality of position measurement devices. Hence, it is possible to increase the transmission capacity of the bus, in terms of number of transmitted position values, since a plurality of position values can be requested in a single message, and likewise a single response on the bus can include plural position values. Embodiments of the signal handling device is referred to as a main module in the specification.

The above mentioned problem is also addressed by an intelligent slave unit for enabling data transmission between a plurality of position measuring devices and a signal handling device of the type described above; the slave unit comprising:
a slave communications port suitable for coupling to an extension port of a signal handling device;
a measurement port for communicating with a position measuring device;
an extension port for connection to an additional intelligent slave unit so as to enable communication with additional position measuring devices via said additional intelligent slave unit; and
a slave data processing unit capable of managing data traffic between the slave communications port, the measurement port and the extension port.

Since each slave unit is provided with an extension port to which another slave unit is easily connectable this solution provides a very high versatility. Additionally this solution makes it possible for the main module to order all slave units to take a measurement sample virtually simultaneously, and to thereafter process the measurement values in parallel.

The above mentioned problem is also addressed by a method for enabling data transmission between a plurality of position measuring devices and a master unit using a signal handling device having a communications port. The method comprises the steps of:
communicating with a master unit via a data bus coupled to the communications port;
communicating with a position measuring device via a measurement port;
enabling communication with a plurality of additional position measuring devices via an extension port; and
managing data traffic between the communications port, the measurement port and the extension port such that a plurality of position values can be communicated via the data bus in a single message.

The above mentioned problem is also addressed by a computer program product, loadable into a digital memory of a signal handling device; comprising software code portions for performing the above mentioned method when said product is run on a data processing unit of a signal handling device. The term "run on a data processing unit" means that the computer program plus the data processing unit carries out a method which may be of the kind described above. The term "loaded into a digital memory of a signal handling device " means that the signal handling device programmed in this way is capable of or adapted to carrying out a method which may be of the kind described above.

The above mentioned problem is also addressed by a computer program product loadable onto a computer readable medium, for use with a slave unit.

An aspect of the invention relates to the problem of reducing the set-up time required by an operator when installing or upgrading a position monitoring system, or a control system, using a plurality of position measuring devices. More specifically this aspect of the invention relates to the problem of reducing the set-up time required by an operator when adding a position measuring device to a position monitoring system.

The invention also addresses the problem of eliminating erroneous set-up of a position monitoring system using a plurality of position measuring devices.

The invention also addresses the problem of facilitating the maintenance of control systems that include movement or position determining encoders.

The invention also addresses the problem of reducing the cost for installing or upgrading a position monitoring system, or a control system.

These problems are addressed by a signal handling device as defined above, wherein the first extension port of the signal handling device has a pre-assembled connector for enabling a releasable plug-in connection of a slave unit thereto. The slave unit also has an extension port which is also provided with a pre-assembled connector of the same physical constitution.

This solution enables an operator to achieve the set-up in a less complex manner since an additional position measuring device is added by the simple measure of plugging a pre-assembled connector, attached to a slave unit/ position measuring device, into a corresponding mating connector of an available extension port.

These problems are also addressed by a computer program product comprising:
computer readable program means for causing a signal handling device to co-operate with any connected slave unit such that a newly connected slave unit is automatically provided with an address to which it should respond.

These problems are also addressed by a computer program product comprising:
computer readable program means for causing a data processing unit to transmit a parameter information request to a connected slave unit for obtaining information about any connected measurement device; and
computer readable program means for causing a data processing unit to receive such parameter information from a connected slave unit, and forward it to the communications port for delivery to a master. The forwarding of the parameter information to the communications port advantageously simplifies the set-up procedure to be performed by an operator since it enables the operator to verify the correctness of the set-up in a very quick and efficient manner. The operator may, for example compare the parameter information thus presented on the masters display with the parameter information, such as serial number and model type, written on the outside of the connected measurement device. In this manner the operator can easily verify that the set-up is correct and that a newly added measurement device complies with the specifications of the position monitoring system, or a control system.

### BRIEF DESCRIPTION OF THE DRAWINGS

So that the invention will be more readily understood, the invention will now be described with reference to the accompanying drawings, in which

Figure 1 is a block diagram of an arrangement having movable parts and a system including a master unit for controlling the movement of these movable parts.

Figure 2 is a block diagram of the master unit shown in Fig. 1.

Figure 3 is a block diagram of a main module for communicating with the master unit according to Fig.2. The main module has an extension port for enabling communication with a plurality of position measurement devices.

Figure 4 is a block diagram of a position measurement device.

Figure 5 is a block diagram of a slave unit 120.

Figure 6 is a schematic side view of a physical embodiment of a pair of pre-assembled mating connectors suitable for hooking up a slave unit to an extension port.

Figure 7 is a flow chart illustrating an embodiment of a procedure for adding a position measuring device 40 to the arrangement 10 shown in Figure 1.

Figure 8 is flow chart illustrating an embodiment of a procedure for collecting data from a plurality of position measuring devices that are connected to a main module.

Figure 9 illustrates an embodiment of the message structure for messages on the bus 70 between the master 50 and the main module 90.

### DESCRIPTION OF EMBODIMENTS

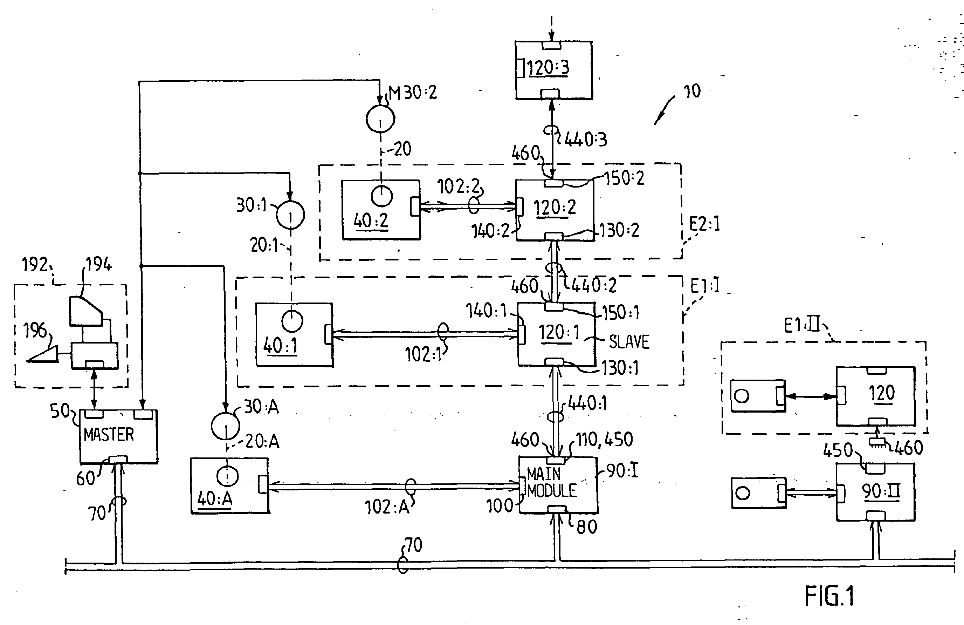

Figure 1 is a block diagram of an arrangement 10 having movable parts 20 and a system for controlling the movement of these movable parts. The arrangement includes a plurality of controllable actuators 30 for causing the movement of the movable parts. The actuators may be motors and the movable parts may be rotatable axes, according to an embodiment of the invention.

The movable parts 20 co-operate with measuring devices 40 generating signals indicative of the movement or the position.

A master unit 50 is coupled to the measuring devices for receiving the measurement signals. The master unit 50 is also coupled to the actuators 30 for providing control signals so as to control the movement of the movable parts 20 in dependence on the measurement signals.

With reference to Fig 1, the master unit 50 is coupled to the measuring devices in the following manner. The master unit 50 has a port 60 to which port a data bus 70 is connected. The data bus 70 is also connectable to a main communications port 80 of a first gateway main module 90:1. A plurality of gateway main modules 90 may be connected to the bus 70, each gateway main module 90 having an individual address. Figure 1 shows, for the purpose of illustration, only a first gateway main module 90:I and a second gateway main module 90:II. The second gateway main module 90:II functions like the first gateway main module 90:I, but it has a different address to which it responds on calls from the master unit 50. According to an embodiment of the invention the data bus 70 is a serial data bus adapted for time-critical communication between automation systems, such as master unit 50, and a plurality distributed peripherals, such as main modules 90:I and 90:II. According to a preferred embodiment the data bus 70 is of the type known as PROFIBUS-DP (PROcess Field Data Bus - Decentralised Periphery), which is a serial data bus which supports data exchange between position measuring devices and a master unit.

The main module 90:I has a measurement port 100 for communicating with a measuring device 40:A via a data bus 102:A, and an extension port 110 for communicating with a slave unit 120:1. The main module 90:I operates to communicate with the master 50, via port 80, in accordance with a first communications protocol, and to communicate with one measurement device 40:A, via measurement port 100, in accordance with a second communications protocol. The main module is also capable of communicating with a plurality of measurement devices 40:1, 40:2...40:n, via extension port 110 using a third communications protocol.

The first, second and third communications protocols are mutually different, and the main module 90 operates to enable bi-directional exchange of data between the master 50 coupled to the main port 80 and each of the plurality of position measurement devices coupled to the ports 100, 110.

The slave unit 120:1 has a communications port 130:1 for connection to the extension port 110 of the main module 90:1, a measurement port 140:1 for communicating with a measuring device 40:1 via a data bus 102:1 and an extension port 150:1 for communicating with another slave unit 120:2.

The slave unit 120:2 has the same physical structure as slave unit 120:1, and is hence connected to a measuring device 40:2 by means of a measurement port 140:2. The control system may be further extended by means of connecting an additional slave unit 120:n+1 with a corresponding measuring devices 40:n+1 in the same manner to the extension port 150 of slave unit 120:n, where n is a positive integer. Although Figure 1 illustrates an embodiment with three slave units 120:1, 120:2, 120:3 it readily understood that the invention is not limited to this number of slave units. According to one embodiment there are seven slave units connected in this manner to one main module. Thus, according to that embodiment a single main module 90 provides connection to eight position measurement devices 40.

The slave unit 120:1 and the measuring device 40:1, in combination, constitute an extension entity E1:I. Likewise slave unit 120:2 in combination with measuring device 40:2 constitute an extension entity E2:I.

### The Master Unit

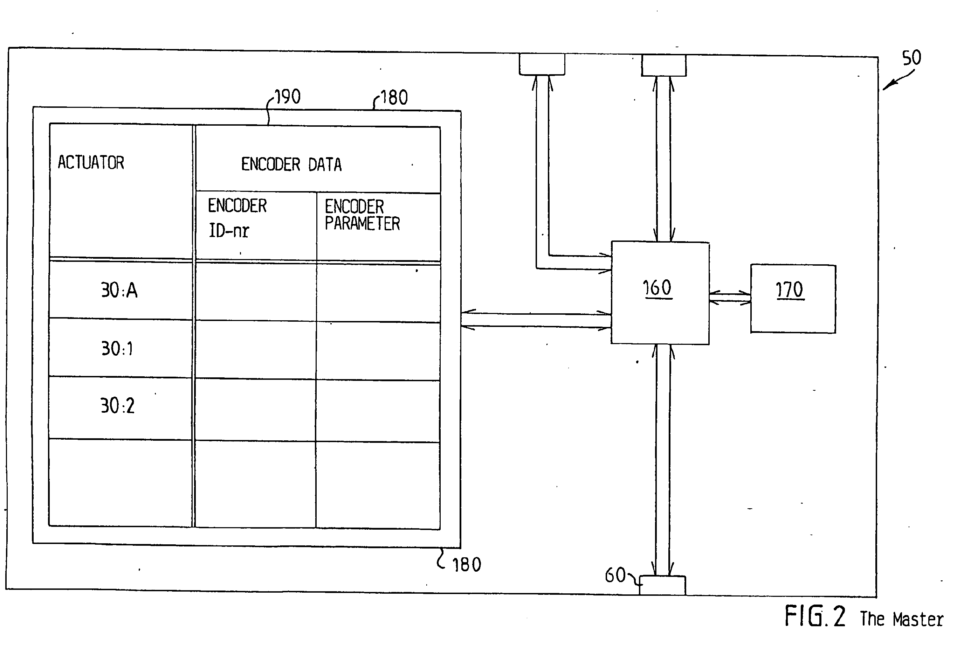

With reference to Fig 2, the master unit 50 includes a computer processor 160 operating in accordance with a program routine which is stored in a memory 170. The master unit 50 also includes a memory 180 comprising a database 190 with information relevant to the control system. The database includes a list of concordance between individual actuators 30:A, 30:1, 30:2 to be controlled and data relating to the corresponding measuring devices 40:A, 40:1, 40:2.

The data in the database 190 includes an identity field for each measuring device and at least one encoder parameter.

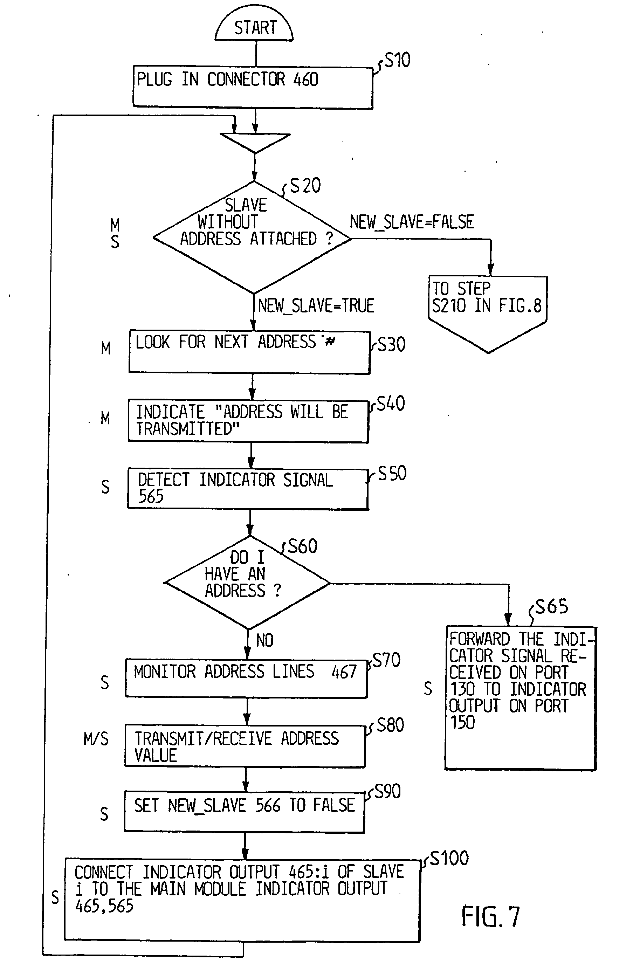

With reference to Fig. 1, the master 50 is coupled to a user interface 192 for enabling an operator to view the contents of the database 190, and to enable manual input of set-up information. For this purpose the user interface includes a display 194 and a data input device 196. After execution of the automatic set-up procedure described with reference to Fig 7 below, the operator may, from the user interface of the master 50, request all the attached position measurement devices 40 to send an identification, such as a serial number, which is electronically readable from a memory portion 310 in the position measurement devices. According to one embodiment of the invention the main module will deliver the identity data for the position measurement devices 40 in a sorted order. The ID data will be sorted in accordance with the order in which the corresponding slave units were attached to the main module. Since the Serial number of the encoder is readable both electronically from the memory portion 310 and optically from a tag 330 the operator is advantageously able to verify the correctness of the set-up by comparing the ID data.

### The main module

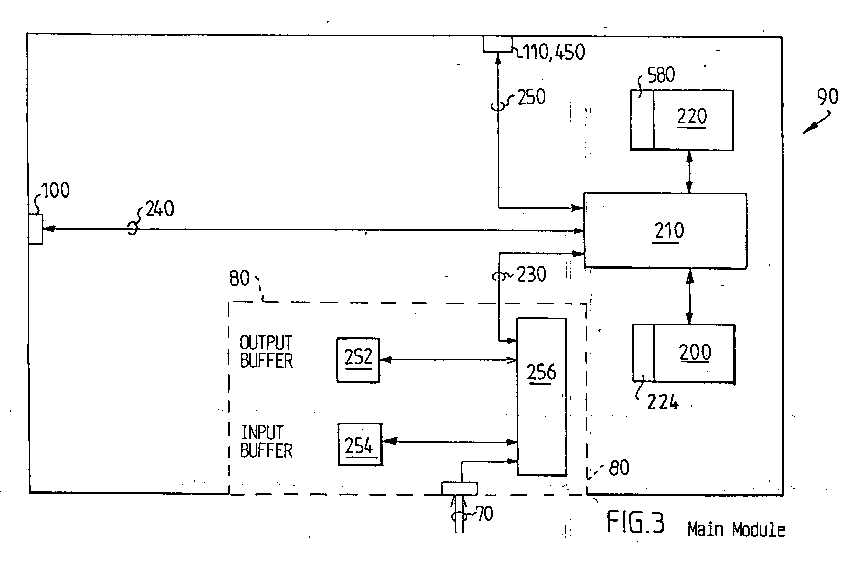

Figure 3 is a block diagram of a main module 90. The main module comprises a digital non-volatile memory 200, a microprocessor 210 and a read/write memory 220. The non-volatile memory 200 has a first memory portion 224 wherein a computer program is stored for controlling the functions of the main module 90. According to an embodiment the non-volatile memory 200 is an electrically erasable memory. The processor 210 is coupled to the ports 80, 100 and 110, respectively, via buses 230, 240 and 250 respectively.

The port 80 is an intelligent communications port which is capable of receiving data from the data bus 230 and storing the received data in a first buffer memory 252. The port 80 also includes a second buffer memory 254 for temporary storage of data received from the bus 70. A transceiver unit 256 handles the data traffic between the buses 230 and 70, and this data traffic procedure may include temporary storage in one of the buffer memories 252,254.

The measurement port 100 of the main module 90 is adapted for serial data transmission with a position measurement device 40. The port 100, according to an embodiment of the invention, provides physical connection to conductors in the bus 102. The conductors in the bus 102 includes a data line on which serial data is transmitted bi-directionally between the main module 90 and the position measurement device 40. This communication is described in further detail in US 5,687,103, the content of which is hereby incorporated by reference.

By means of the extension port 110 the main module 90 is capable of sensing when a new slave unit 150:n+1 has been added to the extension port 110 or to the extension port 150:n of a previously connected slave 120:n. According to one embodiment of the invention the addition of a new slave unit causes the signal level of a sensor line in the extension port to change its value, thereby indicating the presence of a new slave unit.

When the main module 90 has sensed that a new slave has been added, it will deliver an address value on the extension port 110, to be forwarded to the new slave unit 150:n+1. Slave units already provided with addresses will forward the address message to the new slave unit. This is described in detail with reference to Figure 7.

### The Position Measuring Device

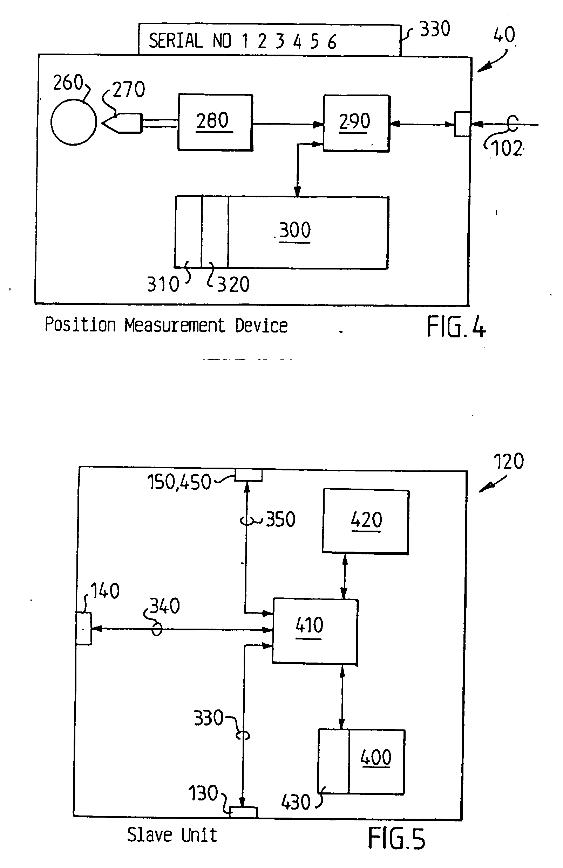

Figure 4 is a block diagram of a position measuring device 40. The position measuring device 40 may be designed essentially as described in US 5,687,103 which is hereby incorporated by reference. The position measuring device 40 may have an encoding disc 260 and a detector 270 for generating an absolute position signal, e.g. a Gray coded signal. A component 280 comprising a parallel/serial converter receives the absolute position signal, and converts it to a stream of data bits suitable for serial transmission via a data bus 102 to the measurement port of a main module 90 or slave unit 120. The component 280 is coupled to a transceiver 290, which transceiver handles the delivery/reception of data messages to/from the data bus 102 (see Fig 1). In this connection, the data bus 102 may include a timing line for timing pulses used for the serial data communication, as mentioned in US 5,687,103 and explained in detail in EP 0 171 579.

The transceiver 290 is also coupled to a memory 300 in which parameters of the position measuring device 40 can be stored. A detailed description of such a parameter memory is provided in US 5,687,103, which is hereby incorporated by reference. The parameter memory 300 is partitioned into several different regions. A first memory region 310 is provided with parameter information which is specific to that particular position measurement device, such as a serial number for providing unambiguous identification of the measurement device. Additionally the first memory region 310 may contain parameters such as the measurement range provided by the encoding disc/detector combination. According to a preferred embodiment the first memory region 310 is write protected.

The memory 300 may also include a second memory region 320 for customer parameters. This second region is a read/write memory region, thus enabling an operator to provide individual settings in the position measuring device. Such data may be read and/or manipulated by means of the user interface 192, described in connection with Figure 1 above.

The position measuring device 40 is also provided with an externally visible tag 330 provided with information identifying the individual device 40. This identity information corresponds to at least some of the parameter information stored in the first memory region 310. The tag 330 enables an operator to visually establish the identity of the encoder connected to a certain movable part e.g. 30:1. Using the above described interface 192 the operator is capable of viewing the contents of the data base 190 (see Fig 2) so as to ensure correct concordance between individual actuators 30:A, 30:1, 30:2 and corresponding measuring devices 40:A, 40:1, 40:2.

### The Slave Unit

Figure 5 is a block diagram of a slave unit 120. The slave unit comprises a non-volatile memory 400, a microprocessor 410 and a read/write memory 420. The non-volatile memory 400 has a first memory portion 430 wherein a computer program is stored for controlling the functions of the slave unit 120. The processor 410 is coupled to the ports 130, 140 and 150, respectively, via buses 330, 340 and 350 respectively.

The measurement port 140 of a slave unit 120 is arranged in the same way as the above described measurement port 100. Hence, data can be communicated bi-directionally in a serial manner between a position measurement device 40 via the measurement port 140.

The communications port 130 is adapted for connection, via a bus 440, to an extension port 110 or 150.

The extension port 150 has the same physical constitution as the extension port 110 of the gateway main module. Similarly the communications port 130 of all the slave units have the same physical constitution. A standardised cable 440:1 with a standardised pre-assembled connector 460 can therefore be used for connecting a first slave 120:1 to a mating connector 450 of the extension port 110 of the main module 90.

An identical standardized cable 440:2 can be used for connecting another slave unit 120:2 to the extension port 150:1 of the first slave unit and so on. The use of a standardized cable 440 (Fig 1 illustrates examples 440:1, 440:2 and 440:3) with standardized connectors provides the advantageous effect of enabling very fast plug-in of new measurement devices 40 for communication with a master module 50. There is no longer any need to perform the arduous task of connecting one conductor at the time when attaching new measurement devices. Hence, the *hardware set-up procedure* is substantially simplified, thereby reducing the time duration for attaching new position measuring devices to a position monitoring system as illustrated in Fig 1. Additionally the time duration for attaching new position measuring devices is further reduced by means of a simplified *software set-up procedure,* featuring automatic addressing of a newly added slave unit. This is achieved by means of the software in the main module co-operating with that of the slave units such that a slave unit that has been added by means of the hardware set-up procedure is automatically provided with an address to which it should respond. Once it responds to its address, the main module 90 will poll it for information about the position measurement device 40 connected to its measurement port 140. In this manner the time duration for set-up is greatly reduced, and reliability of the total system is improved, since the risk for erroneous connections of conductors is eliminated and the data communication is immediately enabled without the need for any operator to set addresses etc. The software set-up procedure is described in more detail in connection with Figure 7 below.

The computer program stored in the first memory portion 430 of non-volatile memory 400 is such that when the program runs on a data processing unit of a slave unit connected to a signal handling device 90, program causes the slave unit 120, to co-operate with the computer program running on the data processing unit of the main module.

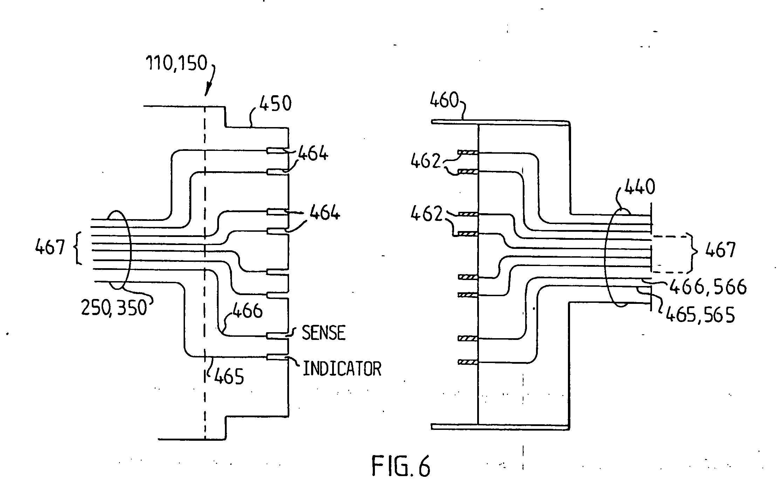

Figure 6 is a schematic sectional side view of a physical embodiment of a pair of pre-assembled mating connectors suitable for hooking up a slave unit with an extension port. With reference to figure 6 in conjunction with Fig 1 the extension port 110 or 150 has a pre-assembled connector 450 adapted for mating with a connector 460 coupled to the communications port 130 of a slave unit via a bus 440. The buses 440:1, 440:2 and 440:3 shown in Fig 1 can be of the type shown in Fig 6, according to an embodiment of the invention. Although the illustration shows male contact pins 462 on connector 460 and female contact receptacles 464 in connector 450, it is readily understood that it could be made in the opposite manner, or by a combination of male and female contact means on each connector.

The connector 450 has eight conductor contacts according to the embodiment shown in Figure 6. A first conductor 465 (Figure 6) provides an indicator signal having a high or a low signal level under the control of the main module processor 210. A second conductor 466 is a sensing line enabling the main module to receive a signal having a high or a low signal level from the slave unit(s) connected to the extension port 110.

A plurality of other conductors 467 are used for bi-directional data traffic between the main module 90 and the slave units 120. According to an embodiment the bus 440 and the internal buses 330 and 350 in the slave units are such that the data lines 467 are directly connected from the communications port 130 of a slave unit to its extension port 150, while allowing for the signals to be tapped by the processor 410.

A high level on the sensing line 466 indicates to the main module that there is no new slave attached. If the main module, however, receives a low signal level (TRUE) on the sense line 466, this means that a new slave unit has been plugged in.

### A Set-up Procedure

Figure 7 is a flow chart illustrating an embodiment of a set-up procedure for an arrangement 10 shown in Figure 1. Letters "M" and "S", respectively, to the left of the boxes in Fig. 7 indicate whether the relevant step is performed by Main module 90 and/or Slave unit 120.

At the start of the set-up procedure there is a main module attached to the bus 70, basically like the main module 90:11 which is shown in Fig 1. In a first step S10 the pre-assembled connector plug 460 of an extension module E1:II is plugged into the mating connector 450 of the main module 90:II. This step is performed by an operator.

The extension module E1:II includes a slave unit 120 which has not yet been provided with any address. Each slave unit 120 generates a status signal for indicating whether it has received an address-value to which it should respond when called by the main module 90 connected to it. Since, in this example, the slave unit 120 in extension module E1:II does not yet have any address it delivers a low (=TRUE) status signal level on its NEW_SLAVE output conductor 566 of communications port 130, 460 (See Fig 6 in conjunction with Fig 1). Hence, the main module will detect whether a new slave unit has been attached (step S20).

When main module 90 detects a TRUE value on the sensing input 466, indicating the presence of a new slave 120, it will look (step S30) in an address register 580 (Fig 3) to see how many slaves, if any, have already been connected to it. The address register, which is a portion of the R/W-memory 220 has an address value #1 reserved for the slave unit 120:1, an address value #2 is reserved for slave unit 120:2 and so on. A flag is set for each address # that has been activated. If this is the first slave to be attached, all the flags will have the boolean value FALSE, and therefore the main module will prepare for delivering address value #1.

Thereafter main module 90 will set the indicator signal 465 to a low (TRUE) level so as to indicate to the slave that it should prepare to receive an address value (step S40). Hence, a low level on the indicator signal means that an address will be transmitted on the data lines 467 (Fig 6) within a pre-determined time interval.

A slave module 120:i without any address will always monitor (step S50) the signal level on the indicator input signal line 565, and when such a slave 120:i detects a low (TRUE) level and that slave 120:i does not yet have any address (step S60), it will react by monitoring (step S70) the data lines 467 so as to receive and record the address value.

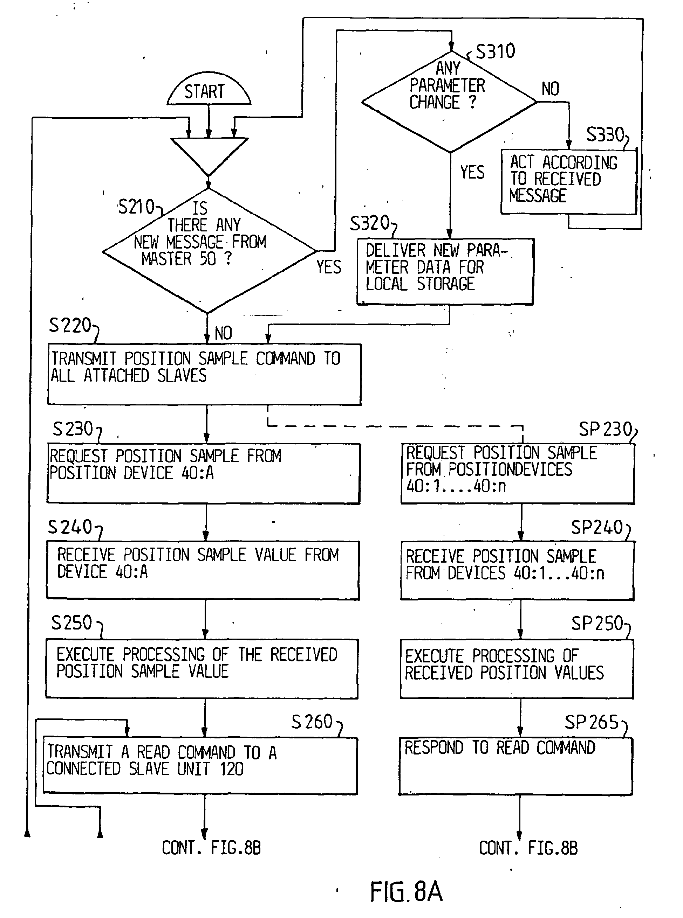

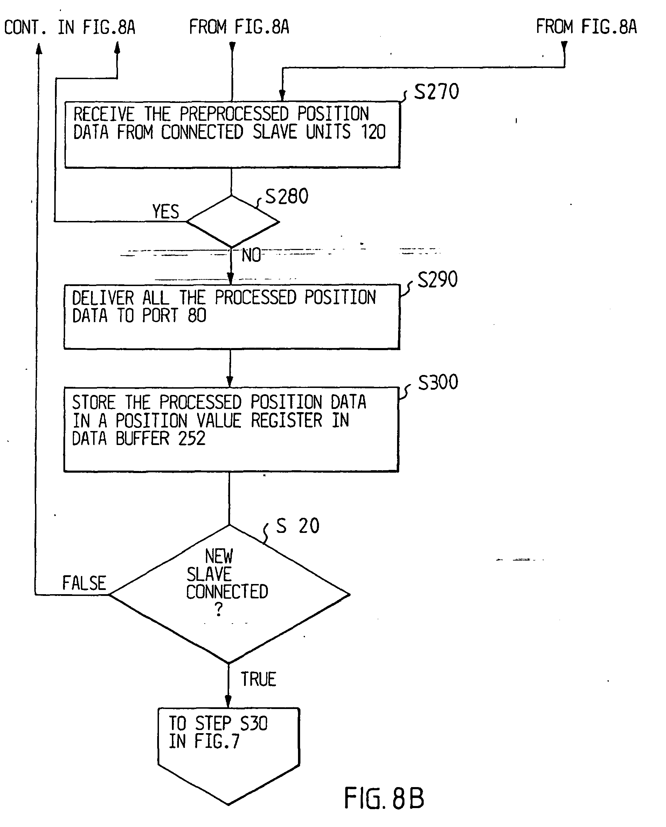

If the test in step S60 reveals that the slave 120:i already has an address (i.e. the YES-branch of box S60) that slave 120:i will enter a transparent mode (step S65). In this mode it will transparently forward signals and address values between its communications port 130:i and its extension port 150:i until the signal level on its sense input 466:i of extension port 150:i indicates that all connected slaves have received an address. This transparent mode advantageously allows for the same set-up procedure to be used by the main module when an additional slave unit is connected to the outmost of the previously connected slave units. Steps S30, S40, S50, S70, S80 and S90 constitutes method steps wherein the main module 90 communicates with a slave unit for providing it with an address. When the new slave unit 120:i is connected to the extension port 150 of a slave unit 120i-1 (which already has received its set-up information) the communication between the main module and slave 120:i will be transparently forwarded by slave unit 120i-1. Thus, the slave has an *active set-up mode* involving the execution of steps S30, S40, S50, S70, S80 and S90; a *transparent set-up mode* step S65; and an operational mode described with reference to Fig. 8 below.

The main module will send the address value (the lowest address value available as indicated by the flags in the register 580) , and the slave 120:i will receive the address value (step S80). In this connection the main module also sets the relevant address flag status to TRUE. For example, when main module sends address value #1 it will also set its internal address #1 flag to TRUE so as to be able to keep track of which addresses have been distributed and how many slaves there are connected to the main module.

In connection with reception of its address value a slave will set its NEW_SLAVE status signal to FALSE (= high signal level), and indicate this to the main module on signal line 566 (fig 6), as indicated by step S90 in Fig 7A.

After the reception of its own address value, i.e. after step S80, the slave will connect its indicator input 565:i on its communications port 130:i, 460 to its indicator output 465:i on its extension port 150:i (step S100). In other words the signal received on indicator input 565:i of communications port 130:i, 460 will be transparently forwarded to the indicator output 465:i of extension port 150:i. In this manner a slave 120:i which has an address value will transparently forward the indicator signal delivered from the main module to the next slave. Likewise, the slave 120:i which has an address value will transparently forward the signal received from the next slave 120:i+1 on its sense input 466:i on its extension port 150:i to its indicator output 566:i on its port 130:i. Slave 120:i, which has an address value, will also transparently forward the address value, delivered by the main module, from its communications port 130:i to its extension port 150:i so as to supply the address value to the new slave 120:i+1. Prior to receiving its own address, slave continuously delivers a high signal level on the indicator output 465:i of its extension port 150:i. This enables the next slave 120:i+1, which may be connected to the extension port 150:i of slave number i to receive an address in the same manner. Hence, the software set-up procedure described with reference to steps S20-S100 can be repeated until all slave units have received an address.

After the conclusion of step S100, the procedure will be repeated from step S20.

If another slave unit i+1 without address is connected to the extension port of the slave i which just received its address, this fact will be detected by the slave i, by means of its sense input 466 and the signal received on the sense input 466 will be forwarded to its communications port 130 for delivery to the main unit (step S20).

If, in step S20, there is not detected any new slave unit the main module will start the data collection procedure, which is described below with reference to Figure 8.

### A Data Collection Procedure

Figure 8 is flow chart illustrating an embodiment of a procedure for collecting data from the position measuring devices 40 that are attached to a main module. The procedure will be described with reference to the arrangement 10 shown in Figure 1 for the purpose of simplifying the understanding. The data collection procedure is described primarily from the point of view of steps performed by the main module 90.

The data collection procedure is a cyclic procedure, i.e. it is iteratively repeated during normal operation. Once the data collection procedure has been started, the first step S210 is to read any message received from the master. According to one embodiment this is done by the processor 210 (Fig 3) requesting information from the port 80. The port transceiver 256 polls the input buffer 254 for any messages received from the bus 70, and delivers any received message, via bus 230, to processor 210. If there is no new message in the input buffer 254 the data collection procedure continues with step 220.

In step S220 the processor 210 transmits a position sample command on extension port 110 so as to order all the attached slave modules 120:1, 120:2...120:n to fetch a position value from their corresponding position measuring devices 40:1, 40:2...40:n. According to one embodiment this is done by means of a message with an address to which all slave units react. This advantageously saves some time and contributes to enable a fast and simultaneous response to the position requests from all position measurement devices 40.

Each slave unit 120 reacts immediately on reception of the position sample command by sending a position value request on its measurement port 140 (Step SP230 in Fig 8A). On reception of the position value request each position measurement device 40 reads the momentary position value and returns the momentary position value via bus 102 to the slave unit 120 that requested it.

The main module processor 210 also sends (step S230) a position value request on its measurement port 100, so as to get the momentary position value from position measuring device 40:A.
In this manner the requests S230 and SP230 by the main module and the slave modules, respectively, are performed substantially as parallel processes. Hence each position measurement device 40A, 40:1...40:n is made to deliver a position sample value substantially simultaneously. According to one embodiment the return of momentary position values is started from all connected position measurement devices 40A, 40:1...40:n within a time span of 0 to 100 microseconds from the execution of step S220. According to a preferred embodiment the return of momentary position values is started from all connected position measurement devices 40A, 40:1...40:n within a time span of 0 to 50 microseconds from the execution of step S220. According to a most preferred embodiment the return of momentary position values is started from all connected position measurement devices 40A, 40:1...40:n within a time span of 0 to 10 microseconds from the execution of step S220.

On reception of the momentary position value from position measurement device 40A (step S240) the processor 210 operates, in accordance with its program routine 224, to perform some data processing (step S 250) of the position value. This processing may include a scaling of the position value in accordance with a pre-set scaling factor. The processed momentary position value is hereinafter referred to as the pre-processed position value. The pre-processed position value is temporarily stored in the read/write memory 220 while awaiting the reception of pre-processed position values from the attached slave units.

In each slave unit the respective processor 410 is also performing data processing (step SP250 in Fig 8A) of the position value so as to generate a pre-processed position value. The pre-processed position value is temporarily stored in a the read/write memory 420 (see Fig 5) while awaiting the moment to transmit it to the main module. Since each position value is processed locally in "its own" slave unit, there is provided a significant relief as regards data processing load on the master and/or main module, thereby advantageously rendering faster overall data processing, i.e. improved performance.

At a pre-determined time after the transmittal of the position sample command S220 the processor 210 of main module 90 starts requesting the slave units to deliver their respective pre-processed position values (step S260). According to an embodiment the main module sends a "read position command" consecutively to the individual slave units, attached via extension port 110, starting with the lowest address.

After reception of the "read position command" each slave unit responds (step SP265, Fig 8A) by transmitting its pre-processed position value.

The main module 90 awaits reception (step S270, Fig 8B) of the pre-processed position value from the first asked slave and, after reception thereof, the main module 90 checks (step S280) if there is still a pre-processed position value to obtain. If there is another value to obtain the steps 260 and 270 are repeated.

In that manner all the pre-processed position values are collected by the main module and sorted in accordance with a predetermined specification. All the pre-processed position values are delivered (S290) to the intelligent port 80 such that it enables the master 50 to reach all these values with a single position request command, as illustrated by step S300 in Figure 8B. According to one embodiment the processor 210 creates a list; and the data relating to position measurement device 40A is placed first in a list, data relating to position measurement device 40:1 is placed second in the list, data relating to position measurement device 40:2 is placed thereafter in the list and so on. In this manner the data is arranged so as to conform with the input data form according to the first communications protocol for communication from the main module 90 to the master 50 via bus 70. The processor delivers the list to port 80 in step S300, and thereafter it starts the cyclic data collection procedure by performing step S210 again (unless a new slave unit has been connected, in which case steps S20 and S30 are executed, according to an embodiment of the invention). According to one embodiment processor 210 adds a time tag indicating the time of position polling for the position values in the list. The time tag is generated in dependence on the time of execution of step S220 or step S230 described above. In this embodiment the main module has a clock function the time of which is synchronised with the time in master 50.

After reception of pre-processed position values from processor 210 the port 80 stores the pre-processed position values in the output buffer 252 such that the values are ready for delivery in accordance with the third communications protocol, whenever a request is received from the master 50. Since the port 80 is an intelligent unit capable by itself of communicating with the master 50, the processor 210 is enabled to continue with its tasks, as defined by the program routine in memory portion 224. Since the data collection is cyclic and repeated with a certain frequency there will always be a fresh set of position values available for collection in the output buffer 252 of port 80. In this manner the master is ensured to get a very quick answer containing the latest update of the pre-processed position values. The transceiver unit 256 has an address to which it responds when called by the master. In this manner the transceiver, upon reception of a position request message from the master 50, is capable of delivering the pre-processed position values relating to all connected position measuring devices 40:A, 40:1...40:n in a single response frame.

The fact that the master can obtain all the position values in response to a single request on the bus 70 leads to an advantageously quick performance of the total position monitoring system 10 shown in Figure 1. More particularly the feature that the master reaches a plurality of position values via a single address on bus 70 leads to a reduction of the amount of data exchange necessary on the bus 70.

Whereas there may exist a position monitoring system having a master for communicating with a plurality of position measuring devices; the master according to the prior art has to address each position measuring device individually, rendering a lot of overhead bytes of data transmission on the bus 70 and thereby also a significant reduction of available bandwidth when one more position measuring device is added to the system. Additionally this prior art position monitoring system will get position values collected at different points in time, since it has to sends individual requests, which is disadvantageous for some control applications.

Referring again to Fig 8, the data collection cycle is normally repeated by performing step S210 after the execution of step S300. According to one embodiment of the invention the data collection process has a maximum cycle duration time of 10 milliseconds when it is not interrupted by the addition of new slave units. This means that a fresh set of mutually simultaneous position values will be delivered to the port 80 every 10 ms. According to a preferred embodiment the cycle duration time is less than one millisecond, such that an up-dated set of position values is provided more than 1000 times per second.

In step S210 the processor requests port 80 for any new message. In response thereto the port transceiver 256 polls the input buffer 254 for any messages received from the bus 70, i.e. from the master 50. If there is a new message, it will be delivered to processor 210. According to one embodiment there is first a check (step S310, Fig 8A) to see whether the message includes any changes to parameter values or pre-setting data relating to any of the position measurement devices. If the message includes such a parameter/data changes, the processor 210 transmits (Step S320) the relevant data, via port 100 and/or port 110, to the relevant measurement devices for storage in the memory region 320 for customer parameters, as described above (Fig 4). According to one embodiment the parameters are stored in the R/W-memory 420 of the slave unit corresponding to the relevant measurement device 40, and in R/W-memory 220 of the main module when the parameter data relates to measurement device 40:A, such that it is readily available for use in the preprocessing step S250, described above. The parameter data may contain information relating to the movable parts 20 or the actuators 30 (Fig 1); information which has been entered by an operator via the operator interface 192.

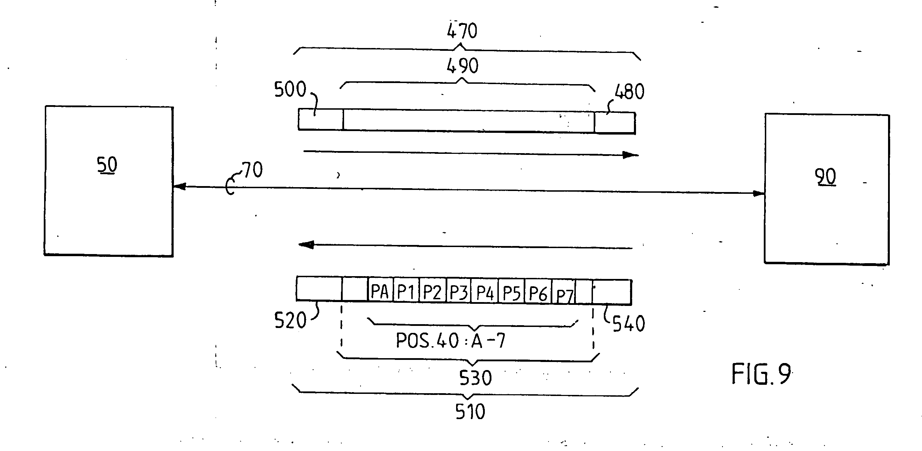

Figure 9 illustrates an embodiment of the message structure for messages on the bus 70 between the master 50 and the main module 90. The frame 470 illustrated above the bus 70 in Fig 9 is a frame travelling in the direction from the master 50 to the main module 90. It has a header 480 including the address to main module 90:I, a data portion 490 and a trailer portion 500. According to one embodiment of the invention the data portion 490 has a settable length. The number of octets in the data portion 490 is settable between 8 and 244. When a parameter change command (See step S310 above) is transmitted by the master, the parameters for the individual position measurement devices are distinguished by pre-determined positions within the data portion 490.

The message frame 510 shown below bus 70 in Fig 9 illustrates an embodiment of a response frame travelling in the direction from the main module 90 to the master 50. The illustrated response frame is a response including the position values discussed in connection with step S290 and step S300 above. The frame has a header 520 which may include the address to master 50, a data portion 530 and a trailer portion 540. The position values for the position measurement devices 40:A, 40:1 - 40:7 are placed in consecutive order within the data portion 530.

If the check step S310 reveals that the message from master 50 did not relate to a delivery of new parameter values, the message may include other instructions from the master 50 to the main module 90, in which case step S310 is followed by step S330. According to one embodiment this means that main module 90 will perform the actions requested by the master before continuing with steps S220-S300 of the data collection cycle. According to another embodiment the main module will perform the requested actions virtually in parallel with the data collection cycle. This may be achieved by time sharing in processor 210 between the two virtually parallel processes. The instruction from master 50 may, for example include a request for diagnostics from a selected one of the position measurement devices 40:A, 40:1-40:n. In response to a diagnostic request the processor 210 of main module 90 will send a diagnostic request the relevant measurement device(s) and , upon response from the relevant measurement device(s) a response frame containing the requested information will be transmitted on the bus 70 with destination to the master 50.

According to one embodiment the message from the master in step S210 may be to instruct the main module to deliver parameter information relating to newly added, or specified, position measurement devices. This requested parameter information may include e.g. the serial number from memory region 310 (Fig.4) of the relevant measurement device(s). In this manner an operator can cause the main module to deliver parameter information from a selected position measurement device so as to enable the operator to compare the information provided by the main module with the serial number on the tag 330 (Fig.4) of the relevant measurement device. This advantageously enables an operator to establish the identity of the measurement device, as mentioned above in connection with the description of Figures 4 , 5 and 7. According to one embodiment the main module always polls a newly connected slave unit for such parameter information as soon as the newly attached slave, or slaves, have been provided with addresses to which it, or they, respond. This feature also provides the advantage of enabling the operator to make sure that the set-up data in the master, as delivered by the main module(s) 90, corresponds to the actual hardware configuration of the position monitoring system.

## Claims

1. A signal handling device (90) for enabling data transmission between a plurality of position measuring devices (40:A, 40:1, 40:2) and a master unit (50); the signal handling device (90) comprising:
a main communications port (80) for communicating with a master unit (50) via a data bus (70);
a measurement port (100) for communicating with a position measuring device (40:A);
an extension port (110) for connection to an intelligent slave unit (120:1) so as to enable communication with a plurality of position measuring devices (40:1, 40:2) via the said slave unit (120:1); and
a data processing unit (210, 224, 220) capable of managing data traffic between the main communications port (80), the measurement port (100) and the extension port (110).

2. The signal handling device (90) according to claim 1, wherein
the data processing unit (210, 224, 220) is adapted to request a position value from any position measurement device (40:A) communicating with the measurement port (100) and to transmit a command on the extension port so as to cause any connected slave unit (120) to request a position value from a position measurement device connected to the slave unit.

3. The signal handling device (90) according to claim 2, wherein
the data processing unit (210, 224, 220) is adapted to co-ordinate the transmission of the position value request (S230) to the measurement port (100) with the transmission of the command (S220) on the extension port (110) such that position measurement values are collected from the connected position measuring devices (40:A, 40:1, 40:2, 40:3-40:n) within a time span in the range of 0 to 100 microseconds from the transmission of the command on the extension port (110).

4. The signal handling device (90) according to claim 1, 2 or 3, wherein the data processing unit (210, 224, 220) has
means (210, 220, 200) for performing mathematical or logical operations on a position value received on the first measurement port (100) such that a first pre-processed position value is obtained,
means (210, 224, 220) for receiving a second pre-processed position value on the first extension port (110), said second pre-processed position value being based on a position value collected by a slave unit (120) and operated on by that same slave unit (120); and
means (210, 224, 220) for arranging (S290, 530) said pre-processed position values in a predetermined manner and means (210, 224, 220) for delivering the arranged pre-processed position values to the main communications port (80) such that all the pre-processed position values can be delivered in a single message (510) on the data bus (70).

5. The signal handling device (90) according to claim 1, 2, 3 or 4, wherein
the first extension port (110) of the signal handling device (90) has a pre-assembled connector (450) for enabling a releasable plug-in connection of a slave unit (120) thereto.

6. An intelligent slave unit (120:i) for enabling data transmission between a plurality of position measuring devices (40:1, 40:2) and a signal handling device (90) according to any of claims 1-5; the slave unit (120:i) comprising:
a slave communications port (130:i) suitable for coupling to an extension port (110, 150) of a signal handling device (90);
a measurement port (140) for communicating with a position measuring device (40);
an extension port (150:i) for connection to an additional intelligent slave unit (120:i+1) so as to enable communication with additional position measuring devices (40) via said additional intelligent slave unit (120:i+1); and
a slave data processing unit (410, 430, 420) capable of managing data traffic between the slave communications port (130:i), the measurement port (140:i) and the extension port (150:i).

7. The intelligent slave unit (120:i) according to claim 6, wherein
the slave data processing unit (410, 430, 420) is adapted to transmit a position value request on its measurement port (140) in response to a measurement command received on its communications port (130) from the main module (90).

8. The intelligent slave unit (120:i) according to claim 6 or 7, wherein
the slave data processing unit (410, 430, 420) has
means (410, 420, 400) for performing mathematical or logical operations on a position value received on the slave measurement port (140) such that a pre-processed position value is obtained,
means (410, 430, 420) for transmitting the pre-processed position value on its communications port (130) in response to a transmission request from the main module (90).

9. The intelligent slave unit (120:i) according to claim 6, 7 or 8, wherein
the extension port (150) of the slave unit (120:i) has a pre-assembled connector (450) for enabling a releasable plug-in connection of another slave unit (120:i+1) thereto.

10. A position monitoring system comprising:
a plurality of position measuring devices (40:A, 40:1, 40:2) for sampling the position of movable actuators;
a master unit (50) for receiving the position information;
a signal handling device (90:1) according to claim any of claims 1-5; and a slave unit (120:1) according to any of claims 6-9, connected to the extension port of the signal handling device (90:1).

11. A method for enabling data transmission between a plurality of position measuring devices (40:A, 40:1, 40:2) and a master unit (50) using a signal handling device (90) having a communications port (80); the method comprising the steps of:
communicating with a master unit (50) via a data bus (70) coupled to the communications port (80);
communicating with a position measuring device (40:A) via a measurement port (100);
enabling communication with a plurality of additional position measuring devices (40:1, 40:2) via an extension port (110); and
managing data traffic between the communications port (80), the measurement port (100) and the extension port (110) such that a plurality of position values can be communicated via the data bus (70) in a single message.

12. The method according to claim 11, wherein said data traffic management comprises:
performing mathematical or logical operations on a position value received on the first measurement port (100) such that a first pre-processed position value is obtained,
receiving a second pre-processed position value on the first extension port (110);
arranging (S290, 530) said pre-processed position values in a predetermined manner; and
delivering the arranged pre-processed position values to the main communications port (80) such that the pre-processed position values can be communicated to a master unit (50) in a single message.

13. A computer program product loadable into a digital memory (200;400) of a signal handling device (90), the signal handling device (90) including a data processing unit (210, 224, 220; 410, 430, 420) and a communications port (80); the computer program product comprising:
computer readable program means for causing a data processing unit (210, 224, 220) to communicate via a data bus (70) coupled to the communications port (80);
computer readable program means for causing a data processing unit (210, 224, 220) to communicate with a position measuring device (40:A) via a measurement port (100);
computer readable program means for causing a data processing unit (210, 224, 220) to enable communication with a plurality of additional position measuring devices (40:1, 40:2) via an extension port (110); and
computer readable program means for causing a data processing unit (210, 224, 220) to manage data traffic between the communications port (80), the measurement port (100) and the extension port (110) such that a plurality of position values can be communicated via the data bus (70) in a single message.

14. The computer program product according to claim 13, further comprising:
computer readable program means for causing a data processing unit (210, 224, 220) to perform mathematical or logical operations on a position value received on the first measurement port (100) such that a first pre-processed position value is obtained,
computer readable program means for causing a data processing unit (210, 224, 220) to receive a second pre-processed position value on the first extension port (110);
computer readable program means for causing a data processing unit (210, 224, 220) to arrange (S290, 530) said pre-processed position values in a predetermined manner; and
computer readable program means for causing a data processing unit (210, 224, 220) to deliver the arranged pre-processed position values to the communications port (80) such that all the pre-processed position values can be communicated via the data bus (70) in a single message.

15. The computer program product according to claim 13, further comprising:
computer readable program means for causing a data processing unit (210, 224, 220) to co-operate with any connected slave unit such that a newly connected slave unit (120) is automatically provided with an address to which it should respond.

16. The computer program product according to claim 15, further comprising:
computer readable program means for causing a data processing unit (210, 224, 220) to transmit a parameter information (310) request to a connected slave unit for obtaining information about a connected measurement device; and
computer readable program means for causing a data processing unit (210, 224, 220) to receive such parameter information (310) from a connected slave unit, and forward it to the communications port (80) for delivery to a master (50).

17. A computer program product
stored on a computer readable medium (200), for use with a slave unit (120) including a data processing unit (410, 430, 420), a communications port (80) and a measurement port (140); the computer program product comprising:
computer readable program means for causing a slave unit (120), when connected to a signal handling device (90), to co-operate with the computer program product according to any of claims 13 to 16.

## Patentansprüche

1. Signalhandhabungserät (90) zum Ermöglichen einer Datenübertragung zwischen einer Vielzahl von Positionsmessgeräten (40:A, 40:1, 40:2) und einer Master-Einheit (50); wobei das Signalhandhabungsgerät (90) umfasst:
einen Hauptkommunikationsport (80) zum Kommunizieren mit einer Master-Einheit (50) über einen Datenbus (70);
einen Messport (100) zum Kommunizieren mit einem Positionsmessgerät (40:A);
einem Erweiterungsport (110) zur Verbindung mit einer intelligenten Slave-Einheit (120:1), um so eine Kommunikation mit einer Vielzahl von Positionsmessgeräten (40:1, 40:2) über die Slave-Einheit (120:1) zu ermöglichen; und
einer Datenverarbeitungseinheit (210, 224, 220), die in der Lage ist, Datenverkehr zwischen dem Hauptkommunikationsport (80), dem Messport (100) und dem Erweiterungsport (110) zu verwalten.

2. Signalhandhabungsgerät (90) nach Anspruch 1, wobei
die Datenverarbeitungseinheit (210, 224, 220) angepasst ist, einen Positionswert von jedem Positionsmessgerät (40:A) anzufordern, das mit dem Messport (100) kommuniziert und einen Befehl auf dem Erweiterungsport zu übertragen, um so jede verbundene Slave-Einheit (120) zu veranlassen, einen Positionswert von einem Positionsmessgerät anzufordern, das mit der Slave-Einheit verbunden ist.

3. Signalhandhabungsgerät (90) nach Anspruch 2, wobei
die Datenverarbeitungseinheit (210, 224, 220) angepasst ist, die Übertragung der Fositionswertanfrage (S320) zu dem Messport (100) mit der Übertragung des Befehls (S220) auf dem Erweiterungsport (110) derart zu koordinieren, dass Positionsmesswerte von den verbundenen Positionsmessgeräten (40 :A, 40:1, 40:2, 40:3-40:n) innerhalb einer Zeitspanne in dem Bereich von 0 bis 100 Mikrosekunden von der Übertragung des Befehls auf dem Erweiterungsport (110) an gesammelt werden.

4. Signalhandhabungsgerät (90) nach Anspruch 1, 2 oder 3, wobei
die Datenverarbeitungseinheit (210, 224, 220) aufweist:
eine Vorrichtung (210, 220, 200) zum Durchführen mathematischer oder logischer Operationen auf einem Positionswert, der auf dem ersten Messport (100) empfangen wird, so dass ein erster vorverarbeiteter Positionswert erhalten wird,
eine Vorrichtung (210, 224, 220) zum Empfangen eines zweiten vorverarbeiteten Positionswertes auf dem ersten Erweiterungsport (110), wobei der zweite vorverarbeitete Positionswert auf einem Positionswert basiert, der von der Slave-Einheit (120) gesammelt wird und auf dem von jener gleichen Slave-Einheit (120) gearbeitet wird; und
eine Vorrichtung (210, 224, 220) zum Anordnen (S290, 530) der Positionswerte in einer vorbestimmten Weise und eine Vorrichtung (210, 224, 220) zum Liefern der angeordneten vorverarbeiteten Positionswerte an den, Hauptkommunikationsport (80) derart, dass alle die vorverarbeiteten Positionswerte in einer einzelnen Nachricht (510) auf dem Datenbus (70) geliefert werden, können.

5. Signalhandhabungsgerät (90) nach Anspruch 1, 2, 3 oder 4, wobei
der erste Erweiterungsport (110) des Signalhandhabungsgerätes (90) einen vorzusammengesetzten Verbinder (450) zum Ermöglichen einer trennbaren. Steckverbindung einer Slave-Einheit (120) mit diesem aufweist,

6. Intelligente Slave-Einheit (120:i) zum Ermöglichen einer Datenübertragung zwischen einer Vielzahl von Positionsmessgeräten (40:1, 40:2) und einem Signalhandhabungsgerät (90) nach einem der Ansprüche 1-5; wobei die Slave-Einheit (120:i) umfasst:
einen Slave-Kommunikationsport (130:i), der geeignet ist, einen Erweiterungsport (110, 150) eines Signalhandhabungsgerätes (90) zu koppeln;
einen Messport (140) zum Kommunizieren mit einem Positionsmessgerät (40);
einen Erweiterungsport (150:i) zur Verbindung mit einer zusätzlichen Intelligenten Slave-Einheit (120:i+1), um so eine Kommunikation mit zusätzlichen Positionsmessgeräten (40:1, 40:2) über die zusätzliche Slave-Einheit (120:i+1) zu ermöglichen; und
eine Slave-Datenverarbeitungseinheit (410, 430, 420), die in der Lage ist, Datenverkehr zwischen dem Slave-Kommunikatonsport (130:i), dem Messport (140:1) und dem Erweiterungsport (150:i) zu verwalten.

7. Intelligente Slave-Einheit (120:i) nach Anspruch 6, wobei
die Slave-Datenverarbeitungseinheit (410, 430, 420) angepasst ist, eine Positionswertanfrage auf ihrem Messport (140) in Reaktion auf einen Messbefehl zu übertragen, der auf ihrem Kommunikationsport (130) von dem Hauptmodul (90) empfangen wird.

8. Intelligente Slave-Einheit (120:i) nach Anspruch 6 oder 7, wobei
die Slave-Datenverarbeitungseinheit (410, 430, 420) aufweist:
eine Vorrichtung (410, 420, 400) zum Durchführen mathematischer oder logischer Operationen auf einem Positionswerte, der auf dem Slave-Messport (140) empfangen wird, so dass ein erster vorverarbeiteter Positionswert erhalten wird,
eine Vorrichtung (410, 430, 420) zum Übertragen des vorverarbeiteten Positionswerte auf ihrem Kommunikationsport (130) in Reaktion auf eine Übertragungsanfrage von dem Hauptmodul (90).

9. Intelligente Slave-Einheit (120:1) nach Anspruch 6, 7 oder 8, wobei der Erweiterungsport (150) der Slave-Einheit (120:i) einen vorzusammengesetzten Verbinder (450) zum Ermöglichen einer trennbaren Steckverbindung mit einer anderen Slave-Einheit (120:i+1) mit dieser aufweist,

10. Positionsüberwachungssystem mit:
einer Vielzahl von Positionsmessgeräten (40:A, 40:1, 40:2) zum Abtasten der Position beweglicher Aktuatoren;
einer Master-Einheit (50) zum Empfangen von Positionsinformation;
einem Signalhandhabungsgerät (90:1) nach einem der Ansprüche 1-5; und
einer Slave-Einheit (120: i) einem der Ansprüche 6-9, die mit dem Erweiterungsport des Signalhandhabungsgerätes (30:1) verbunden ist.

11. Verfahren zum Ermöglichen einer Datenübertragung zwischen einer Vielzahl von Positionsmessgeräten (40:A, 40:1, 40:2) und einer Master-Einheit (50) iunter Verwendung eines Signalhandhabungsgerätes (90) mit einem Kommunikationsport (80); wobei Verfahren die Schritte umfasst:
Kommunizieren mit einer Master-Einheit (50) über einen Datenbus (70), der mit dem Kommunikationsport (80) gekoppelt ist;
Kommunizieren mit einem Positionsmessgerät (40:A) über einen Messport (100);
Ermöglichen einer Kommunikation mit einer Vielzahl von zusätzlichen Positionsmessgeräten (40:1, 40:2) über einen Erweiterungsport (110); und
Verwalten von Datenverkehr zwischen dem Hauptkommunikationsport (80), dem Messport (100) und dem Erweiterungsport (110), so das eine Vielzahl von Positionswerten über den Datenbus (70) in einer einzelnen Nachricht übermittelt werden kann.

12. Verfahren nach Anspruch 11, wobei die Datenverkehrsverwaltung umfasst:
Durchführen mathematischer oder logischer Operationen auf einem Positionswert, der auf dem ersten Messport (100) empfangen wird, so dass ein erster vorverarbeiteter Positionswert erhalten wird,
Empfangen eines zweiten vorverarbeiteten Positionswertes auf dem ersten Erweiterungsport (110);
Anordnen (S290, 530) der vorverarbeiteten Positionswerte in einer vorbestimmten Weise; und
Liefern der angeordneten vorverarbeiteten Positionswerte an den Hauptkommunikationsport (80) derart, dass die vorverarbeiteten Positionswerte in einer einzelnen Nachricht an eine Master-Einheit (50) übermittelt werden können.

13. Computerprogrammprodukt, das in einen digitalen Speicher (200, 400) eines Signalhandhabungsgerät (90) ladbar ist, wobei das Signalhandhabungsgerät (90) eine Datenverarbeitungseinheit (210, 224, 220, 410, 430, 420) und einen Kommunikationsport (80) einschließt ; wobei das Computerprogrammprodukt umfasst:
eine Computer-lesbare Programmvorrichtung zum Veranlassen einer Datenverarbeitungseinheit (210, 224, 220), über einen Datenbus (70) zu kommunizieren, der mit dem Kommunikationsport (80) gekoppelt ist
eine Computer-lesbare Frogrammvorrichtung zum Veranlassen einer Datenverarbeitungseinheit (210, 224, 220), mit einem Positionsmessgerät (40:A) über einen Messport (100) zu kommunizieren;
eine Computer-lesbare Programmvorrichtung zum Veranlassen einer Datenverarbeitungseinheit (210, 224, 220), eine Kommunikation mit einer Vielzahl von zusätzlichen Positionsmessgeräten (40:1, 40:2) über einen Erweiterungsport (110) zu ermöglichen; und
eine Computer-lesbare Programmvorrichtung zum Veranlassen einer Datenverarbeitungseinheit (210, 224, 220), einen Datenverkehr zwischen dem Kommunikationsport (80), dem Messport (100) und dem Erweiterungsport (110) derart zu verwalten, dass eine Vielzahl von Positionswerten über den Datenbus (70) in einer einzelnen Nachricht übermittelt werden kann.

14. Computerprogrammprodukt nach Anspruch 13, weiter mit:
einer Computer-lesbaren Programmvorrichtung zum Veranlassen einer Datenverarbeitungseinheit (210, 224, 220), mathematische oder logische Operationen auf einem Positionswert durchzuführen, der auf dem ersten Messport (100) empfangen wird, so dass ein erster vorverarbeiteter Positionswert erhalten wird,
einer Computer-lesbaren Programmvorrichtung zum Veranlassen einer Datenverarbeitungseinheit (210, 224, 220), einen zweiten vorverarbeiteten Positionswert auf dem ersten Erweiterungsport (110) zu empfangen;
einer Computer-lesbaren Programmvorrichtung zum Veranlassen einer Datenverarbeitungseinheit (210, 224, 220), die vorverarbeiteten Positionswerte in einer vorbestimmten Weise anzuordnen (S290, 530); und
einer Computer-lesbaren Programmvorrichtung zum Veranlassen einer Datenverarbeitungseinheit (210, 224, 220), die angeordneten vorverarbeiteten Positionswerte an den Kommunikationsport (80) derart liefern, dass die vorverarbeiteten Positionswerte in einer einzelnen Nachricht über den Datenbus (70) übermittelt werden können.

15. Computerprogrammprodukt nach Anspruch 13, weiter mit:
einer Computer-lesbaren Programmvorrichtung zum Veranlassen einer Datenverarbeitungseinheit (210, 224, 220), mit jeder verbundenen Slave-Einheit derart zusammenzuarbeiten, dass eine neu verbundene Slave-Einheit (120) automatisch mit einer Adresse versorgt wird, an die diese antworten sollte.

16. Computerprogrammprodukt nach Anspruch 15, weiter mit:
einer Computer-lesbaren Programmvorrichtung zum Veranlassen einer Datenverarbeitungseinheit (210, 224, 220), eine Anfrage von Parameterinformation (310) an eine verbundene Slave-Einheit zum Erhalten von Information über ein verbundenes Messgerät zu übertragen; und
einer Computer-lesbaren Programmvorrichtung zum Veranlassen einer Datenverarbeitungseinheit (210, 224, 220), derartige Parameterinformation (310) von einer verbundenen Slave-Einheit zu empfangen und diese an den Kommunikationsport (80) zur Lieferung an einen Master (50) weiterzuleiten.

17. Computerprogrammprodukt, das auf einem Computer-lesbaren Medium (200) gespeichert ist, zur Verwendung mit einer Slave-Einheit (120) einschließlich einer Datenverarbeitungseinheit (410, 430, 420), einem Kommunikationsport (80) und einem Messport (140); wobei das Computerprogrammprodukt umfasst:
eine Computer-lesbare Programmvorrichtung zum Veranlassen einer Slave-Einheit (120), wenn mit einem Signalhandhabungsgerät verbunden (90), mit dem Computerprogrammprodukt nach einem der Ansprüche 13 bis 16 zusammenzuarbeiten.

## Revendications

1. Dispositif (90) de traitement du signal permettant une transmission de données entre une pluralité de dispositifs (40:A, 40:1, 40:2) de mesure de position et une unité maître (50) ; ce dispositif (90) de traitement du signal comprenant :
un port de communication principal (80) permettant de communiquer avec une unité maître (50) par l'intermédiaire d'un bus de données (70) ;
un port de mesure (100) permettant de communiquer avec un dispositif (40:A) de mesure de position ;
un port d'extension (110) destiné à la connexion à une unité esclave intelligente (120:1), de manière à permettre une communication avec une pluralité de dispositifs (40:1, 40:2) de mesure de position par l'intermédiaire de ladite unité esclave (120:1) ; et
une unité (210, 224, 220) de traitement de données, capable de gérer un trafic de données entre le port de communication principal (80), le port de mesure (100) et le port d'extension (110).

2. Dispositif (90) de traitement du signal selon la revendication 1, dans lequel
l'unité de traitement de données (210, 224, 220) est conçue pour demander une valeur de position à partir de tout dispositif (40:A) de mesure de position communiquant avec le port de mesure (100) et pour transmettre une commande sur le port d'extension, de manière à amener toute unité esclave connectée (120) à demander une valeur de position à partir d'un dispositif de mesure de position connecté à l'unité esclave.

3. Dispositif (90) de traitement du signal selon la revendication 2, dans lequel
l'unité de traitement de données (210, 224, 220) est conçue pour coordonner la transmission de la demande (S230) de valeur de position au port de mesure (100) avec la transmission de la commande (S220) sur le port d'extension (110), si bien que les valeurs de mesure de position sont recueillies à partir des dispositifs (40:A, 40:1, 40:2, 40:3 à 40:n) de mesure de position connectés pendant un intervalle de temps de l'ordre de 0 à 100 µs à compter de la transmission de la commande sur le port d'extension (110).

4. Dispositif (90) de traitement du signal selon la revendication 1, 2 ou 3, dans lequel l'unité de traitement de données (210, 224, 220) comporte
des moyens (210, 220, 200) permettant de réaliser des opérations mathématiques ou logiques sur une valeur de position reçue sur le premier port de mesure (100), si bien qu'on obtient une première valeur préalablement traitée de position,
des moyens (210, 224, 220) permettant de recevoir une deuxième valeur préalablement traitée de position sur le premier port d'extension (110), ladite deuxième valeur préalablement traitée de position étant fondée sur une valeur de position recueillie par une unité esclave (120) et actionnée par la même unité esclave (120) ; et
des moyens (210, 224, 220) permettant d'arranger (S290, 530) lesdites valeurs de position préalablement traitées suivant une manière prédéterminée, et des moyens (210, 224, 220) permettant de fournir ces valeurs de position préalablement traitées au port principal (80) de communication, si bien que toutes les valeurs de position préalablement traitées peuvent être fournies sous forme d'un seul message (510) sur le bus (70) de données.

5. Dispositif (90) de traitement du signal selon la revendication 1, 2, 3 ou 4, dans lequel
le premier port d'extension (110) du dispositif (90) de traitement du signal comporte un connecteur préalablement assemblé (450) permettant d'y réaliser une connexion enfichable et libérable d'une unité esclave (120).

6. Unité esclave intelligente (120:i) permettant la transmission de données entre une pluralité de dispositifs (40:1, 40:2) de mesure de position et un dispositif (90) de traitement du signal conforme à l'une quelconque des revendications 1 à 5; cette unité esclave (120:i) comprenant :
un port de communication esclave (130:i) approprié pour couplage à un port d'extension (110, 150) d'un dispositif (90) de traitement du signal ;
un port de mesure (140) permettant de communiquer avec un dispositif (40) de mesure de position ;
un port d'extension (150:i) permettant la connexion à une unité esclave intelligente supplémentaire (120:i+1), de manière à permettre la communication avec des dispositifs supplémentaires (40) de mesure de position, par l'intermédiaire de ladite unité esclave intelligente supplémentaire (120:i+1) ; et
une unité esclave (410, 430, 420) de traitement de données, capable de gérer le trafic de données entre le port de communication esclave (130:i), le port de mesure (140:i) et le port d'extension (150:i).

7. Unité esclave intelligente (120:i) selon la revendication 6, dans laquelle
l'unité esclave (410, 430, 420) de traitement de données est conçue pour transmettre une demande de valeur de position sur son port de mesure (140), en réponse à une commande de mesure reçue sur son port de communication (130) à partir du module principal (90).

8. Unité esclave intelligente (120:i) selon la revendication 6 ou 7, dans laquelle
l'unité esclave (410, 430, 420) de traitement de données comporte
des moyens (410, 420, 400) permettant de réaliser des opérations mathématiques ou logiques sur une valeur de position reçue sur le port de mesure esclave (140), si bien qu'on obtient une valeur de position traitée préalablement,
des moyens (410, 430, 420) permettant de transmettre la valeur de positionnement traitée préalablement sur son port de communication (130), en réponse à une demande de transmission provenant du module principal (90).

9. Unité esclave intelligente (120:i) selon la revendication 6, 7 ou 8, dans laquelle
le port d'extension (150) de l'unité esclave (410, 430, 420) comporte un connecteur préassemblé (450), afin d'y permettre une connexion enfichable et libérable d'une autre unité esclave (120:i+1).

10. Système de suivi de position comprenant :
une pluralité de dispositifs (40:A, 40:1, 40:2) de mesure de position permettant d'échantillonner la position d'actionneurs mobiles ;
une unité maître (50) permettant de recevoir les informations relatives à la position ;
un dispositif (90:1) de traitement du signal selon l'une quelconque des revendications 1 à 5 ; et
une unité esclave (120:i) selon l'une quelconque des revendications 6 à 9, connectée au port d'extension du dispositif (90:1) de traitement du signal.

11. Procédé permettant la transmission de données entre une pluralité de dispositifs (40:A, 40:1, 40:2) de mesure de position et une unité maître (50) à l'aide d'un dispositif (90) de traitement du signal comportant un port de communication (80) ce procédé comprenant les étapes suivantes :
communication avec une unité maître (50) par l'intermédiaire d'un bus (70) de données couplé au port de communication (80)
communication avec un dispositif (40:A) de mesure de position par l'intermédiaire d'un port de mesure (100)
gestion du trafic de données entre le port de communication (80), le port de mesure (100) et le port d'extension (110), si bien qu'une pluralité de valeurs de position peut être communiquée par l'intermédiaire du bus (70) de données sous forme d'un seul message.

12. Procédé selon la revendication 11, dans lequel ladite gestion de trafic de données comprend :
la réalisation d'opérations mathématiques ou logiques sur une valeur de position reçue sur le premier port de mesure (100), si bien qu'on obtient une première valeur préalablement traitée de position,
la réception d'une deuxième valeur préalablement traitée de position sur le premier port d'extension (110)
l'arrangement (S290, 530) desdites valeurs préalablement traitées de position de manière prédéterminée ; et
le fait de fournir les valeurs arrangées et préalablement traitées de position au port principal (80) de communication, si bien qu'on peut communiquer les valeurs préalablement traitées de position à une unité maître (50) sous forme d'un seul message.

13. Produit de type programme informatique chargeable dans une mémoire numérique (200 ; 400) d'un dispositif (90) de traitement de signal, le dispositif (90) de traitement de signal comprenant une unité (210, 224, 220 ; 410, 430, 420) de traitement du signal et un port de communication (80); ce produit de type programme informatique comprenant :
des moyens constituant un programme lisible par ordinateur, permettant d'amener une unité (210, 224, 220) de traitement de données à communiquer par l'intermédiaire d'un bus de données (70) couplé au port de communication (80);
des moyens constituant un programme lisible par ordinateur permettant d'amener une unité (210, 224, 220) de traitement de données à communiquer avec un dispositif (40:A) de mesure de position par l'intermédiaire d'un port de mesure (100) ;
des moyens constituant un programme lisible par ordinateur permettant d'amener une unité (210, 224, 220) de traitement de données à permettre la communication avec une pluralité de dispositifs (40:1, 40:2) de mesure de position par l'intermédiaire d'un port d'extension (110) ; et
des moyens constituant un programme lisible par ordinateur permettant d'amener une unité (210, 224, 220) de traitement de données à gérer le trafic de données entre le port de communication (80), le port de mesure (100) et le port d'extension (110), si bien qu'une pluralité de valeurs de position peut être communiquée par l'intermédiaire du bus de données (70) sous forme d'un seul message.

14. Produit de type programme informatique selon la revendication 13, comprenant en outre :
des moyens constituant un programme lisible par ordinateur permettant d'amener une unité (210, 224, 220) de traitement de données à réaliser des opérations mathématiques ou logiques sur une valeur de position reçue sur le premier port de mesure (100), si bien qu'on obtient une première valeur préalablement traitée de position,
des moyens constituant un programme lisible par ordinateur permettant d'amener une unité de traitement de données (210, 224, 220) à recevoir une deuxième valeur préalablement traitée sur le premier port d'extension (110) ;
des moyens constituant un programme lisible par ordinateur permettant d'amener une unité (210, 224, 220) de traitement de données à arranger (S290, 530) lesdites valeurs préalablement traitées de position suivant un mode prédéterminé ; et
des moyens constituant un programme lisible par ordinateur permettant d'amener une unité (210, 224, 220) de traitement de données à fournir les valeurs arrangées et préalablement traitées de position au port de communication (80), si bien que les valeurs préalablement traitées de position peuvent être communiquées par l'intermédiaire du bus de données (70) sous forme d'un seul message.

15. Produit de type programme informatique selon la revendication 13, comprenant en outre :
des moyens constituant un programme lisible par ordinateur permettant d'amener une unité (210, 224, 220) de traitement de données à coopérer avec n'importe quelle unité esclave connectée, si bien qu'une unité esclave nouvellement connectée (120) est automatiquement dotée d'une adresse à laquelle elle devra répondre.

16. Produit de type programme informatique selon la revendication 15, comprenant en outre :
des moyens constituant un programme lisible par ordinateur permettant d'amener une unité (210, 224, 220) de traitement de données à transmettre une demande d'information (310) relative à des paramètres à une unité esclave connectée, afin d'obtenir de l'information concernant un dispositif connecté de mesure ; et
des moyens constituant un programme lisible par ordinateur permettant d'amener une unité (210, 224, 220) de traitement de données à recevoir ces informations (310) relatives à des paramètres à partir d'une unité esclave connectée, et de les envoyer au port de communication (80) en vue de leur acheminement jusqu'à une unité maître (50).

17. Produit de type programme informatique
enregistré sur un support (200) lisible par un ordinateur, qu'utilise une unité esclave (120)
comprenant une unité (410, 430, 420) de traitement de données, un port de communication (80) et un port de mesure (140) ce produit de type programme informatique comprenant :
des moyens constituant un programme lisible par ordinateur, permettant d'amener une unité esclave (120), quand elle est connectée à un dispositif (90) de traitement du signal, à coopérer avec le produit de type programme informatique conforme à l'une quelconque des revendications 13 à 16.
